# EUROPÄISCHE PATENTSCHRIFT

(11) **EP 1 165 279 B1**
(45) Veröffentlichungstag und Bekanntmachung des Hinweises auf die Patenterteilung: **05.03.2003**
(21) Anmeldenummer: 00914159.9
(22) Anmeldetag: 22.03.2000
(51) Int. Cl.: B23B 51/00

(54) **BOHRER MIT AUSWECHSELBAREM SCHNEIDEINSATZ**
DRILL WITH EXCHANGEABLE CUTTING INSERTS
FORET A INSERT DE COUPE INTERCHANGEABLE

(30) Priorität: 29.03.1999 DE 19914170
(43) Veröffentlichungstag der Anmeldung: 02.01.2002
(73) Patentinhaber: KENNAMETAL INC., Latrobe, PA 15650-0231 (US)
(72) Erfinder: KRENZER, Ulrich, D-90513 Zirndorf (DE)
(74) Vertreter: Tergau & Pohl Patentanwälte
(86) Internationale Anmeldenummer: EP0002515
(87) Internationale Veröffentlichungsnummer: WO00058046

(56) Entgegenhaltungen:
- DE-A- 19 543 233
- DE-C- 94 340
- DE-C- 367 010
- FR-A- 1 068 867

## Beschreibung

Die Erfindung betrifft einen Bohrer mit auswechselbarem Schneideinsatz gemäß dem Oberbegriff des Patentanspruches 1.

Zum Herstellen von Bohrungen werden heute im metallverarbeitenden Gewerbe überwiegend Spiralbohrer verwendet. Je nach Anwendungsfall können sich diese Spiralbohrer in Bezug auf den Schneidstoff und die Geometrie unterscheiden. Der klassische Schnellarbeitsstahl (HSS) wird zunehmend durch das wesentlich verschleißfestere Hartmetall ersetzt. Für große Bohrwerkzeuge ist jedoch ein sogenannter Vollhartmetallbohrer in der Regel zu teuer und trotzt der hohen Zerspanungsleistung nicht wirtschaftlich. Alternativen sind Spiralbohrer, bei denen eine aus Hartmetall bestehende Bohrerspitze in ein gewöhnlich aus Werkzeugstahl gefertigtes Trägerwerkzeug eingelötet wird. Der Nachteil dieser Werkzeuge liegt jedoch in der stark eingeschränkten Nachschleifbarkeit. Sobald der kurze Schneidenteil aus Hartmetall aufgebraucht ist, muss das Werkzeug als Ganzes verschrottet werden.

AUS den gattungsgemäßen DE 195 43 233 A, EP 441 302 A2, DE 196 05 157 A1 und US 5,649,794 sind Spiralbohrer bekannt, bei denen die Werkzeugspitze mit kleinen Schrauben mit dem Bohrer-Grundkörper verbunden wird. Diese auch als "Spitzbohrmesser" bekannten Werkzeuge haben jedoch gegenüber den vorgenannten Spiralbohrem meist den Nachteil, dass ihre Stabilität wegen der für die Schrauben eingearbeiteten Bohrungen geschwächt ist. Weiterhin kann durch diese Verschraubungen der Späneabfluss behindert werden. Darüber hinaus begrenzen die Schrauben die Anwendung solcher Bohrwerkzeuge für kleine Bohrungsdurchmesser. In der Praxis sind Schrauben kleiner M2 nicht mehr werkstattgerecht zu handhaben. Auch sind Bohrwerkzeuge bekannt, bei denen der Schneidkörper nur durch eine Pressverbindung im Trägerwerkzeug gehalten wird (siehe beispielsweise DE 44 35 857 A1 oder EP 460 237 A1). Bei einer derartigen Lösung kann aber nicht ausgeschlossen werden, dass sich die Schneidkörper beim Herausziehen des Bohrers aus der Bohrung lösen. Für eine automatisierte Fertigung sind solche Werkzeuge daher sehr problematisch. Aus WO 98/10881 A1 sind weiterhin Werkzeuge bekannt, bei denen die Bohrerspitze nach Art eines Bajonettverschlusses mit dem Grundkörper verbunden sind. Bei diesen Bohrwerkzeugen löst sich zwar der Schneidkörper beim Herausziehen des Bohrers aus der Bohrung nicht vom Bohrergrundkörper. Sie sind jedoch nur unter einem relativ hohen fertigungstechnischen Aufwand herstellbar.

Davon ausgehend ist es die Aufgabe der Erfindung, einen Bohrer vorzuschlagen, der einfach herzustellen ist und bei dem dennoch der Schneideinsatz in allen Betriebszuständen des Bohrers sicher im Bohrer-Grundkörper gehalten wird.

Diese Aufgabe wird bei einem Bohrer mit den Merkmalen des Oberbegriffes des Anspruches 1 dadurch gelöst, dass jeweils zwischen einer Anlagefläche des Schneideinsatzes und einer Seitenwandung der Aufnahme eine sich in Richtung der Bohrerlängsachse erstreckende Nut vorhanden ist, in der ein Klemmkeil form- und reibschlüssig einliegt und mit dem Grundkörper und dem Schneideinsatz nach Art einer zur Bohrerspitze hin wirksamen Selbsthemmung zusammenwirkt. Vorteilhaft bei dieser Ausgestaltung ist zunächst die leichte Montierbarkeit. Der Schneideinsatz muss zur Fixierung am Bohrergrundkörper nur von der Bohrerspitze her in die Aufnahme unter Zwischenlage der Klemmkeile eingesetzt werden. Die in einer Selbsthemmung miteinander zusammenwirkenden Flächen sind derart beschaffen, dass die für die Selbsthemmung erforderlichen Reibbeiwerte erreicht sind. Ebenso sind für das in Rede stehende Zusammenspiel verantwortlichen Keilwinkel relativ klein und liegen etwa unter 10°. Vorteilhaft ist weiterhin, dass trotz der einfachen Montage sehr hohe Haltekräfte erreicht werden. Wenn ein Bohrer aus dem Bohrloch herausgezogen wird, wirken auf den Schneideinsatz erhebliche Kräfte, die die Vorschubkräfte sogar übersteigen können. Während bei herkömmlichen Befestigungsarten, etwa einer Verschraubung des Schneideinsatzes mit dem Grundkörper, beim Herausziehen des Bohrers aus einem Bohrloch mit zunehmender Kraft die Schraubverbindung zusehends belastet und geschwächt wird, ist es bei einem erfindungsgemäßen Bohrer gerade umgekehrt. Hier nimmt die Festigkeit der Verbindung mit zunehmender Krafteinwirkung auf das Schneidteil aufgrund der zunehmenden Klemmwirkung der Klemmkeile sogar noch zu.

Bei einer vorteilhaften Ausgestaltung sind die Klemmkeile die Schenkel einer U-förmigen Klammer. In montagetechnischer Hinsicht ist dies vorteilhaft, weil die Teileanzahl reduziert wird. Außerdem können die Schenkel der Klammer im Nicht-Montagezustand so gestaltet sein, dass der Außenabstand ihrer Außenflächen größer ist als die lichte Weite der Aufnahme, so dass die Feder mit Vorspannung in die Aufnahme eingesetzt werden kann.

Für die Bewerkstelligung der vorgenannten Selbsthemmung mithilfe der Klemmkeile stehen grundsätzlich zwei Möglichkeiten zur Verfügung. Bei der einen Möglichkeit sind die die Schenkel der Klammer aufnehmenden Nuten im Schneideinsatz angeordnet. Die Außenflächen der Klemmkeile und die mit ihnen zusammenwirkenden Seitenwandbereiche der Aufnahme verlaufen parallel zur Längsachse, wobei die Innenflächen der Klemmkeile sowie die mit ihnen zusammenwirkenden Abschnitte der Nut-Grundfläche jeweils einen sich zur Bohrerspitze hin schließenden spitzen Winkel bilden. Die Oberflächengüte der miteinander zusammenwirkenden Flächen ist dabei derart gewählt, dass die Reibung zwischen den Außenflächen der Klemmkeile und der Seitenwandung der Aufnahme größer ist als die Reibung zwischen der Innenfläche der Klemmkeile und der Nut-Grundfläche. Wird der Schneideinsatz mit einer zur Bohrerspitze hin gerichteten Kraft beaufschlagt, erfolgt eine automatische Verklemmung des Schneidteils in der Aufnahme. Der obengenannte Winkel liegt in einem Bereich von 1° bis 8°, vorzugsweise wird ein Winkel von 2° gewählt.

Die zweite Möglichkeit, die vorbezeichnete Selbsthemmung zu erreichen, besteht darin, dass bei in der Seitenwandung der Aufnahme eingelassener Nut die Innenflächen der Klemmkeile und die mit ihnen zusammenwirkenden Abschnitte der Anlagefläche des Schneideinsatzes parallel zur Bohrerlängsachse verlaufen, während die Außenflächen der Klemmkeile und die mit ihnen zusammenwirkenden Bereiche der Nut-Grundfläche jeweils einen sich zur Bohrerspitze schließenden Winkel bilden, wobei die Reibung zwischen der Außenfläche der Klemmkeile und der Seitenwandung der Aufnahme kleiner ist als die Reibung zwischen der Innenfläche der Klemmkeile und der Anlagefläche des Schneideinsatzes. Auch in diesem Falle erfolgt bei einer zur Bohrerspitze hin gerichteten Kraftbeaufschlagung des Schneideinsatzes eine automatische Festklemmung des Schneideinsatzes in der Aufnahme des Grundkörpers. Um das Herausnehmen des Schneideinsatzes zu ermöglichen, ist zwischen dem Schneideinsatz und dem Verbindungssteg der Klammer ein axialer Zwischenraum vorhanden. Mit einem in diesem Zwischenraum eingeführtem Hebelwerkzeug, etwa einem Schraubendreher oder dgl. kann der Schneideinsatz aus der Aufnahme herausgedrückt werden. Dabei wird durch das genannte Werkzeug die Klammer in ihrer Position gehalten und nur der Schneideinsatz bewegt, so dass die von der Klammer ausgehende Selbsthemmung sich nicht entfalten kann.

Der Schneideinsatz bzw. dessen Anlageflächen und die mit ihnen zusammenwirkende Seitenwandung der Aufnahme sind so geformt, dass der Schneideinsatz mit einem in Radialrichtung wirksamen Formschluss in der Aufnahme einliegt.

Die Erfindung wird anhand von in den beigefügten Zeichnungen dargestellten Ausführungsbeispielen näher erläutert. Es zeigen:
- Fig. 1: einen Axialschnitt durch den Spitzenbereich eines ersten Ausführungsbeispiels eines erfindungsgemäßen Bohrers,
- Fig. 2: einen Schneideinsatz in Seitenansicht,
- Fig. 3: eine Draufsicht in Richtung des Pfeiles III in Fig. 2,
- Fig. 4: einen Längsschnitt entsprechend der Linie IV-IV in Fig. 3,

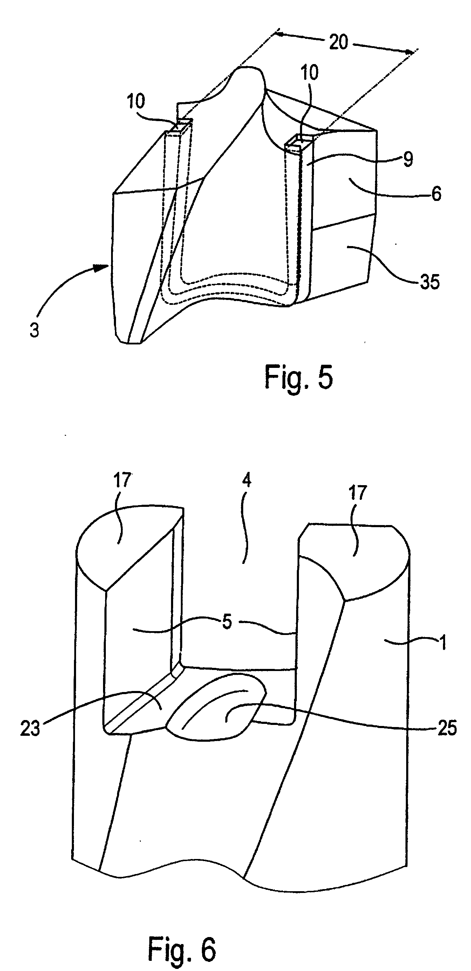

- Fig. 5: eine perspektivische Darstellung eines Schneideinsatzes mit einer Klammer,
- Fig. 6: den Spitzenbereich eines Bohrergrundkörpers mit entferntem Schneideinsatz,
- Fig. 7: einen Längsschnitt durch den Spitzenbereich einer zweiten Ausführungsform des erfindungsgemäßen Bohrers,
- Fig. 8: die Seitenansicht eines alternativ gestalteten Schneideinsatzes,
- Fig. 9: eine Draufsicht in Richtung des Pfeiles IX in Fig. 8 und
- Fig. 10: einen Längsschnitt entsprechend der Linie X-X in Fig. 9.

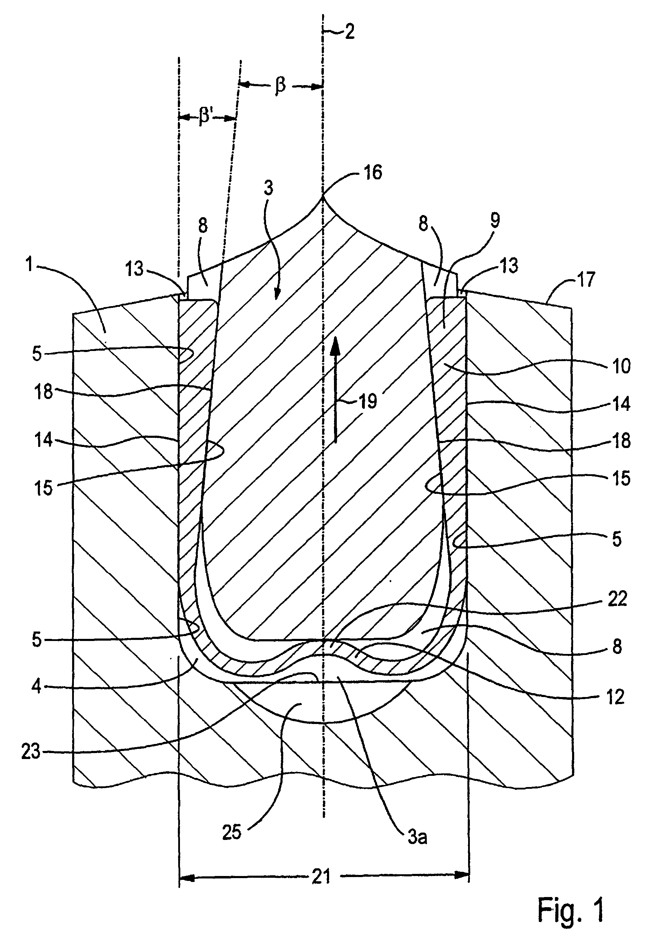

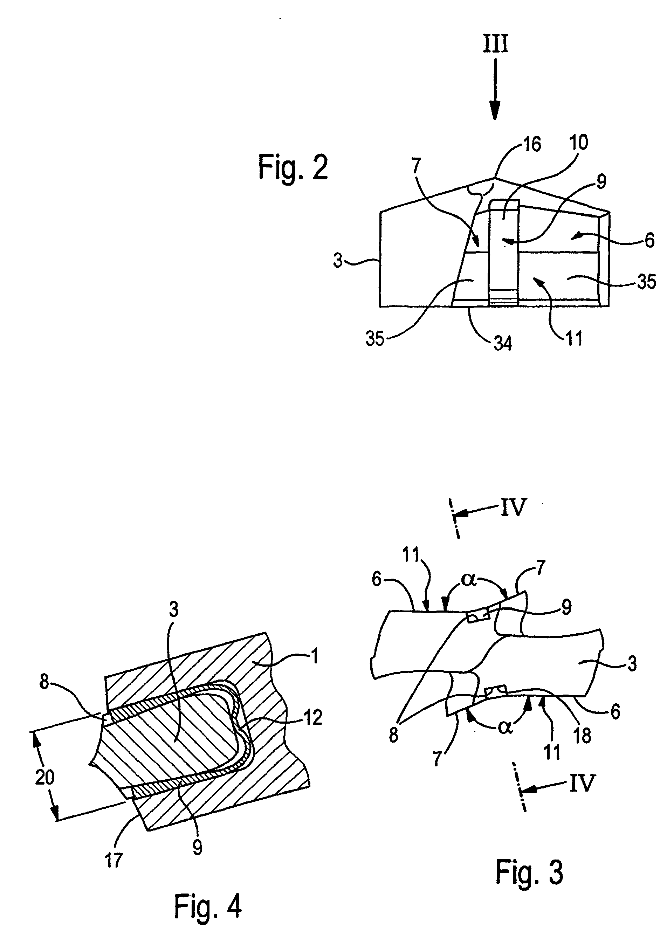

Der in Fig. 1 gezeigte Bohrer weist einen Grundkörper 1 und eine Aufnahme 4 auf, die einen Schneideinsatz 3 trägt. Die die Aufnahme 4 bildende Ausnehmung in dem spitzenseitigen Bereich des Grundkörpers 1 öffnet sich zur Stirnseite 17 des Grundkörpers 1 hin und erstreckt sich quer zur Längsachse 2 des Bohrers durch den Grundkörper hindurch. Wie aus der Draufsicht nach Fig. 3 ersichtlich ist, weist der Schneideinsatz 3 seitliche Anlageflächen 11 auf, die mit der Seitenwandung 5 der Aufnahme 2 formschlüssig zusammenwirken. Die Anlageflächen 11 setzen sich aus zwei Prismenflächen 6, 7 zusammen, die einen stumpfen Winkel α einschließen. Jeweils zwei der Prismenflächen 7-7 und 6-6 sind einander diametral gegenüber angeordnet und verlaufen parallel zueinander. Die Seitenwandung 5 der Aufnahme 4 ist komplementär gestaltet, so dass der Schneideinsatz in Radialrichtung formschlüssig im Grundkörper fixiert ist. An der Steile, an der die beiden Prismenflächen 6,7 aneinanderstoßen ist im Schneideinsatz 3 eine sich in Richtung der Längsachse 2 erstreckende Nut 8 vorhanden. Wie dem Querschnitt nach Fig. 1 zu entnehmen ist, ist die Nut im Längsschnitt gesehen U-förmig. Sie erstreckt sich also bis zu der spitzenfernen Stirnseite 3a des Schneideinsatzes 3 und erstreckt sich auch über diese Stirnseite hinweg. In der Nut liegt eine im Wesentlichen U-förmige Klammer 9 ein, deren beide Schenkel 10 keilförmig ausgebildet sind. Die Schenkel 10 sind durch einen Verbindungssteg 12 miteinander verbunden. Die Aufnahme 4 bzw. deren Seitenwandung 5 ist derart gestaltet, dass im Bereich der Nut 8 bzw. der Klammer 9 ein Radialabstand 13 vorhanden ist. Dagegen sind die Schenkel 10 der Klammer 9 so bemessen, dass sie mit ihren Außenflächen 14 reibschlüssig an der Seitenwandung 5 anliegen.

Die Außenflächen 14 der Klemmkeile bzw. Schenkel 10 der Klammer 9 verlaufen im Längsschnitt der Fig. 1 gesehen parallel zur Längsachse 2. Gleiches gilt für die mit ihnen zusammenwirkenden Flächenbereiche der Seitenwandung 5. Die Innenflächen 15 der Schenkel 10 verlaufen schräg und bilden mit der Längsachse 2 einen sich zur Bohrerspitze 16 hin schließenden Winkel β. Dementsprechend bilden die Innenflächen 15 und die Außenflächen 14 der Schenkel 10 einen sich zur Bohrerspitze 16 öffnenden Winkel β'. Die Schenkel 10 verdicken sich also keilförmig zur Bohrerspitze hin. Die Schenkel 10 enden mit Axialabstand vor der Stirnseite 17 des Grundkörpers 1. Die miteinander zusammenwirkenden Flächen der Schenkel, des Schneideinsatzes 3 und der Aufnahme 4 sind so beschaffen, dass die Reibung zwischen den Außenflächen 14 der Schenkel 10 und der Seitenwandung 5 größer ist als die Reibung zwischen der Innenfläche 15 der Schenkel 10 und der Nut-Grundfläche 18 (Fig. 1, 3). Durch diese Ausgestaltung ist gewährleistet, dass bei einer Kraftbeaufschlagung des Schneideinsatzes in Richtung des Pfeiles 19 dieser in der Aufnahme 4 festgeklemmt wird.

Die Montage des Schneideinsatzes 3 ist denkbar einfach. Zunächst wird die Klammer 9 in die Nut 8 eingesetzt und dann der Schneideinsatz zusammen mit der Klammer in die Aufnahme 4 eingeschoben. Die Breite 20 (Fig. 4) der Klammer 9 ist im Nicht-Montagezustand größer als die lichte Weite 21 der Aufnahme 4, so dass im Montagezustand die Schenkel 10 mit Vorspannung an der Seitenwandung 5 anliegen. Durch diese Ausgestaltung ist bereits zumindest eine Vorfixierung des Schneideinsatzes gewährleistet, ohne dass dieser in Pfeilrichtung 19 mit einer Kraft beaufschlagt wird.

Der Verbindungssteg 12 weist einen mittleren, zur Bohrerspitze 16 hin vorgewölbten Abschnitt 22 auf, was die elastische Vorspannfähigkeit der Klammerschenkel 10 unterstützt. Zur Entfernung des Schneideinsatzes 3 aus der Aufnahme 4 ist ein etwa schraubendreherartiges Werkzeug 24 in eine im Boden 23 der
Aufnahme vorhandene, sich radial nach außen erstreckende Abschrägung oder Ausnehmung 25 einführbar. Das Werkzeug setzt an der Klammer 9 an, so dass sich die Selbsthemmung nicht entfalten kann.

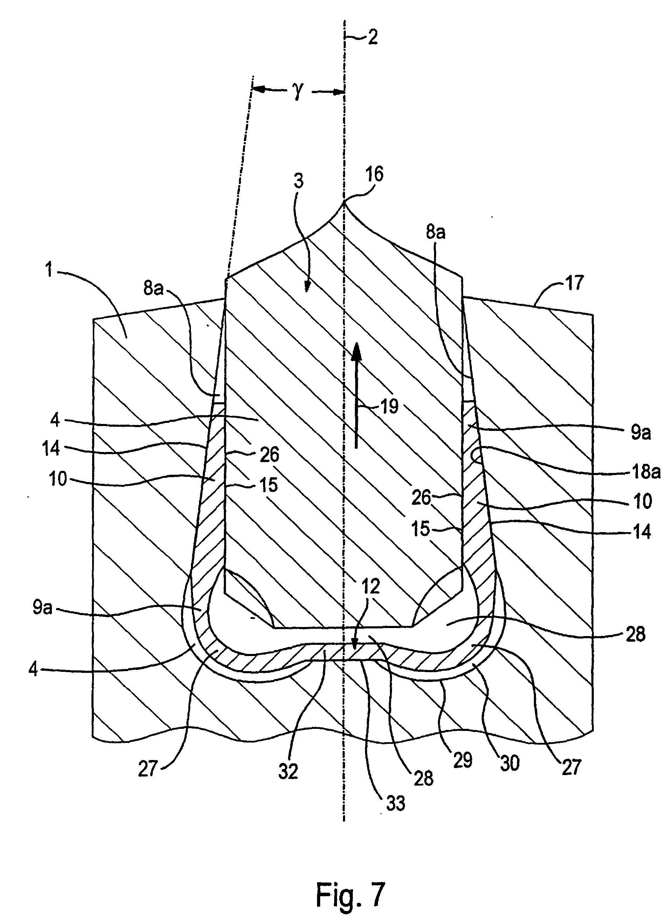

Bei dem in Fig. 7 dargestellten Ausführungsbeispiel ist die die Klammer 9a aufnehmende Nut 8a im Grundkörper bzw. in der Seitenwandung 5 der Aufnahme 4 eingelassen. Die Innenflächen 15 der Schenkel 10 sowie die mit den Innenflächen zusammenwirkenden Bereiche der Anlageflächen 11 verlaufen parallel zur Längsachse 2. Die Außenflächen 14 der Schenkel dagegen bilden mit der Längsachse 2 einen zur Bohrerspitze 16 geschlossenen Winkel γ. Die Nut-Grundfläche 18a der im Grundkörper 1 angeordneten Nut 8a weist eine entsprechende Schrägstellung auf. Die im Sinne einer Selbsthemmung zusammenwirkenden Oberflächen sind derartig beschaffen, dass die Reibung zwischen der Außenfläche 14 und der Nut-Grundfläche 18a kleiner ist als die Reibung zwischen der Innenfläche 15 der Schenkel 10 und der mit der Innenfläche zusammenwirkenden Flächenbereiche 26 des Schneideinsatzes 3. Bei einer Kraftbeaufschlagung des Schneideinsatzes 3 in Richtung des Pfeiles 19 erfolgt somit eine automatische Festklemmung des Schneideinsatzes 3 in der Aufnahme 4.

Um ein Herausnehmen des Schneideinsatzes 3 aus der Aufnahme 4 zu ermöglichen ist zwischen dem Verbindungssteg 12 der Klammer 9 und demSchneideinsatz 3 ein Zwischenraum 28 vorhanden, in den ein etwa schraubendreherartiges Werkzeug eingeführt werden kann. Dadurch ist es möglich, den Schneideinsatz 3 in Richtung des Pfeiles 19 zu bewegen, wobei die Klammer 9 in ihrer Position verharrt, wodurch die selbsthemmende Wirkung der Klammer 9 außer Kraft gesetzt ist.

Die den abgerundeten Ecken 27 benachbarten Bereiche 29 der Aufnahme 4 sind hohlkehlenartig ausgemuldet, so dass zwischen den Ecken 27 und der Aufnahmewandung ein Hohlraum 30 entsteht. Der zwischen den abgerundeten Ecken 27 angeordnete Mittelabschnitt 32 des Verbindungssteges 12 stützt sich auf einen in Richtung auf die Bohrerspitze 16 vorspringenden, zwischen den Bereichen 29 angeordneten Auflagevorsprung 33 ab.

Die Prismenflächen 6, 7 können, wie in Fig. 2 dargestellt ist, einen sich etwa von ihrer Mitte aus in Richtung zur ihrer Basisfläche 34 erstreckenden gefarsten Längsabschnitt 35 aufweisen, der das Einführen des Schneideinsatzes in die Aufnahme 4 erleichtert.

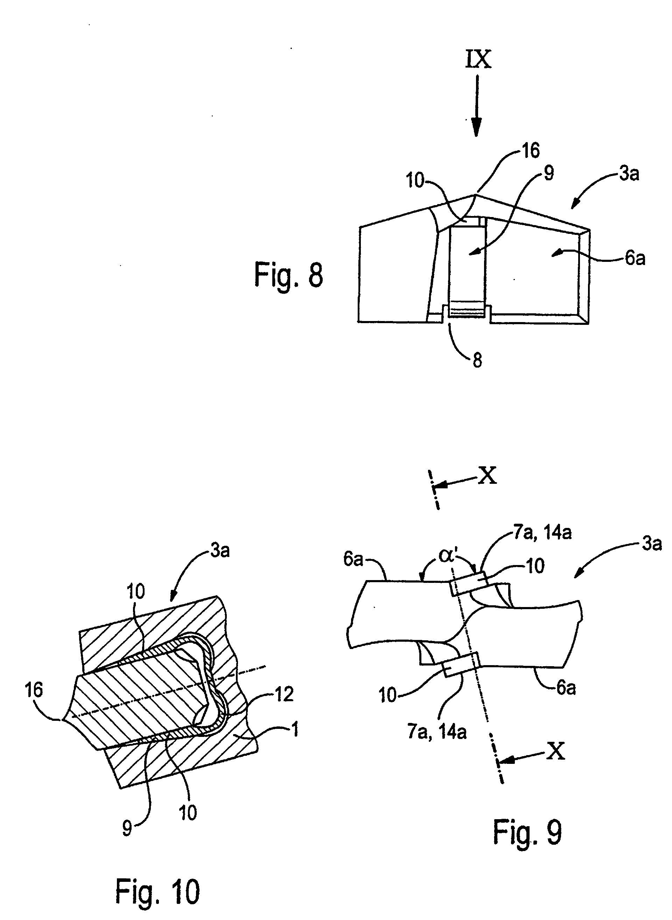

Bei dem in Fig. 8 bis 10 dargestellten Ausführungsbeispiel eines Schneideinsatzes 3a sind entsprechend dem Beispiel nach Fig. 3 zwei diametral gegenüberliegende und parallel zueinander verlaufende Prismenflächen 6a vorhanden. Die zweite, mit der erstgenannten Prismenfläche einen stumpfen Winkel α bildende Prismenfläche 7a wird bei diesem Ausführungsbeispiel jedoch nicht durch den Schneideinsatz 3 selbst sondern durch die Außenfläche 14a der Schenkel 10 gebildet. Die mit den Prismenflächen 6a und 7a zusammenwirkenden Flächenbereiche der Aufnahme 4 sind komplementär zu diesen Flächen gestaltet, so dass der Schneideinsatz 3a mit einem in Radialrichtung wirksamen Formschluss in der Aufnahme 4 einliegt.

### Bezugszeichenliste

- 1: Grundkörper
- 2: Längsachse
- 3: Schneideinsatz
- 3a: Stirnseite
- 4: Aufnahme
- 5: Seitenwandung
- 6: Prismenfläche
- 7: Prismenfläche
- 8: Nut
- 9: Klammer
- 10: Schenkel
- 11: Anlagefläche
- 12: Verbindungssteg
- 13: Radialabstand
- 14: Außenfläche
- 15: Innenfläche
- 16: Bohrerspitze
- 17: Stirnseite
- 18: Nut-Grundfläche
- 19: Pfeil
- 20: Breite
- 21: lichte Weite
- 22: Abschnitt
- 23: Boden
- 25: Ausnehmung
- 26: Flächenbereich
- 27: Ecke
- 28: Zwischenraum
- 29: Bereich
- 30: Hohlraum
- 32: Mittelabschnitt
- 33: Auflagevorsprung
- 34: Basisfläche
- 35: Längsabschnitt

- α: Winkel
- β: Winkel
- γ: Winkel

## Patentansprüche

1. Bohrer mit einem Grundkörper (1) und einem auswechselbaren Schneideinsatz (3), wobei der Schneideinsatz (3) in einer zur Bohrerspitze (16) hin offenen, den Grundkörper quer zu dessen Längsachse (2) durchsetzenden Aufnahme (4) einliegt, und wobei der Schneidkörper (3) mit zwei diametral gegenüberliegenden Anlageflächen an den Seitenwandungen (5) der Aufnahme (4) anliegt,
**dadurch gekennzeichnet,**
**dass** jeweils zwischen einer Anlagefläche des Schneideinsatzes (3) und einer Seitenwandung (5) der Aufnahme (4) eine sich in Richtung der Längsachse (2) erstreckende Nut (8) vorhanden ist, in der ein Klemmkeil form- und reibschlüssig einliegt und mit dem Grundkörper (1) und dem Schneideinsatz (3) nach Art einer zur Bohrerspitze (16) hin wirksamen Selbsthemmung zusammenwirkt.

2. Bohrer nach Anspruch 1,
**dadurch gekennzeichnet,**
**dass** die Klemmkeile die Schenkel (10) einer U-förmigen Klammer (9) sind.

3. Bohrer nach Anspruch 1 oder 2,
**dadurch gekennzeichnet,**
**dass** die Nuten (8) im Schneidkörper angeordnet sind, und
**dass** die Außenflächen (14) der Klemmkeile und die mit ihnen zusammenwirkenden Seitenwandbereiche der Aufnahme (4) parallel zur Längsachse (2) verlaufen und das die Innenflächen (15) der Klemmkeile sowie die mit ihnen zusammenwirkenden Abschnitte der Nut-Grundfläche (18) jeweils einen sich zur Bohrerspitze hin schließenden spitzen Winkel (β) bilden, wobei die Reibung zwischen den Außenflächen (14) und der Seitenwandung (5) größer ist als die Reibung zwischen der Innenfläche (15) und der Nut-Grundfläche (18).

4. Bohrer nach Anspruch 3,
**gekennzeichnet durch**
einen Winkel (β) von 1° bis 8°.

5. Bohrer nach Anspruch 3 oder 4,
**dadurch gekennzeichnet,**
**dass** der zwischen den Schenkeln (10) verlaufende Verbindungssteg (12) der Klammer (9) in seinem mittleren Abschnitt in Richtung auf die Bohrerspitze vorgewölbt ist.

6. Bohrer nach Anspruch 1 oder 2,
**dadurch gekennzeichnet,**
**dass** die Nuten (8a) in der Seitenwandung (5) des Schneideinsatzes (3) eingelassen sind, und dass die Innenflächen (15) der Klemmkeile und die mit ihnen zusammenwirkenden Bereiche der Anlageflächen des Schneideinsatzes (3) parallel zur Bohrerlängsachse (2) verlaufen und dass die Außenflächen (14) der Klemmkeile und die mit ihnen zusammenwirkende Nut-Grundfläche (18a) jeweils einen sich zur Bohrerspitze (16) schließenden Winkel (γ) bilden, wobei die Reibung zwischen der Außenfläche (14) und der Nut-Grundfläche (18a) kleiner ist als die Reibung zwischen der Innenfläche (15) und der Anlagefläche des Schneidteils (3).

7. Bohrer nach Anspruch 6,
**dadurch gekennzeichnet,**
**dass** zwischen dem Schneideinsatz (3) und dem Verbindungssteg (12) der Klammer (9) ein axialer Zwischenraum (28) vorhanden ist.

8. Bohrer nach einem der Ansprüche 2 bis 7,
**dadurch gekennzeichnet,**
**dass** die Klammer (9) unter elastischer Vorspannung in der Aufnahme (4) einliegt, wobei die Außenflächen (14) der Klemmkeile an die Seitenwandungen (5) der Aufnahme (4) drücken.

9. Bohrer nach einem der Ansprüche 1-8,
**dadurch gekennzeichnet,**
**dass** der Schneideinsatz (3) mit einem radial wirksamen Formschluss in der Aufnahme (4) einliegt.

## Claims

1. Drill having a parent body (1) and an interchangeable cutting insert (3), the cutting insert (3) lying in a receptacle (4) which is open towards the drill point (16) and passes through the parent body transversely to its longitudinal axis (2), and the cutting body (3) bearing with two diametrically opposite bearing surfaces against the side walls (5) of the receptacle (4), **characterized in that** there is a groove (8) extending in the direction of the longitudinal axis (2) in each case between a bearing surface of the cutting insert (3) and a side wall (5) of the receptacle (4), in which groove (8) a clamping wedge lies in a positive-locking and frictional manner and interacts with the parent body (1) and the cutting insert (3) in a self-locking manner effective towards the drill point (16).

2. Drill according to Claim 1, **characterized in that** the clamping parts are the legs (10) of a U-shaped clip (9).

3. Drill according to Claim 1 or 2, **characterized in that** the grooves (8) are arranged in the cutting body, and **in that** the outer surfaces (14) of the clamping wedges and the side-wall regions of the receptacle (4) which interact with them run parallel to the longitudinal axis (2), and **in that** the inner surfaces (15) of the clamping wedges and the sections of the groove root surface (18) which interact with them in each case form an acute angle (β) closing towards the drill point, the friction between the outer surfaces (14) and the side wall (5) being greater than the friction between the inner surface (15) and the groove root surface (18).

4. Drill according to Claim 3, **characterized by** an angle (β) from 1° to 8°.

5. Drill according to Claim 3 or 4, **characterized in that** the connecting web (12), running between the legs (10), of the clip (9) is arched forward in its centre section in the direction of the drill point.

6. Drill according to Claim 1 or 2, **characterized in that** the grooves (8a) are sunk in the side wall (5) of the cutting insert (3), and **in that** the inner surfaces (15) of the clamping wedges and those regions of the bearing surfaces of the cutting insert (3) which interact with them run parallel to the drill longitudinal axis (2), and **in that** the outer surfaces (14) of the clamping wedges and the groove root surface (18a) interacting with them in each case form an angle (γ) closing towards the drill point (16), the friction between the outer surface (14) and the groove root surface (18a) being less than the friction between the inner surface (15) and the bearing surface of the cutting part (3).

7. Drill according to Claim 6, **characterized in that** there is an axial intermediate space (28) between the cutting insert (3) and the connecting web (12) of the clip (9).

8. Drill according to one of Claims 2 to 7, **characterized in that** the clip (9) lies in the receptacle (4) under elastic prestress, the outer surfaces (14) of the clamping wedges pressing against the side walls (5) of the receptacle (4).

9. Drill according to one of Claims 1 to 8, **characterized in that** the cutting insert (3) lies in the receptacle (4) with a radially effective form grip.

## Revendications

1. Foret avec un corps de base (1) et un insert de coupe (3) interchangeable, l'insert de coupe (3) étant placé dans un logement (4) ouvert vers la pointe de foret (16) et traversant le corps de base perpendiculairement à son axe longitudinal (3), et le corps de coupe (3) étant en appui sur les parois latérales (5) du logement (4) avec deux surfaces d'appui diamétralement opposées, **caractérisé en ce que**, entre une surface d'appui respective de l'insert de coupe (3) et une paroi latérale (5) respective du logement (4), se trouve une gorge (8) s'étendant en direction de l'axe longitudinal (2) dans laquelle une clavette de serrage est placée par coopération de formes et par coopération de friction et coopère avec le corps de base (1) et l'insert de coupe (3) à la manière d'un autoblocage agissant vers la pointe de foret (16).

2. Foret selon la revendication 1, **caractérisé en ce que** les clavettes de serrage sont les branches (10) d'une pince (9) en forme de U.

3. Foret selon l'une ou l'autre des revendications 1 et 2, **caractérisé en ce que** les gorges (8) sont agencées dans le corps de coupe, et **en ce que** les surfaces extérieures (14) des clavettes de serrage et les zones de paroi latérale coopérant avec elles, du logement (4), s'étendent parallèlement à l'axe longitudinal (2) et **en ce que** les surfaces intérieures (15) des clavettes de serrage ainsi que les tronçons, coopérant avec elles, de la surface de base (18) de la gorge forment chacune un angle aigu (β) qui se ferme vers la pointe du foret, la friction entre les surfaces extérieures (14) et la paroi latérale (5) étant plus grande que la friction entre la surface intérieure (15) et la surface de base (18) de la gorge.

4. Foret selon la revendication 3, **caractérisé par** un angle (β) compris entre 1° et 8°.

5. Foret selon l'une ou l'autre des revendications 3 et 4, **caractérisé en ce que** la traverse de liaison (12) s'étendant entre les branches (10) de la pince (9) est bombée avec son tronçon médian en direction de la pointe du foret.

6. Foret selon l'une ou l'autre des revendications 1 et 2, **caractérisé en ce que** les gorges (8a) sont ménagées dans la paroi latérale (5) de l'insert de coupe (3), et **en ce que** les surfaces intérieures (15) des clavettes de serrage (3) et les zones, coopérant avec elles, des surfaces d'appui de l'insert de coupe (3), s'étendent parallèlement à l'axe longitudinal (2) du foret, et **en ce que** les surfaces extérieures (14) des clavettes de serrage et la surface de base (18a) des gorges coopérant avec elles forment chacune un angle (γ) se fermant vers la pointe de foret (16), la friction entre la surface extérieure (14) et la surface de base (18a) de la gorge étant plus petite que la friction entre la surface intérieure (15) et la surface d'appui de l'insert de coupe (3).

7. Foret selon la revendication 6, **caractérisé en ce qu'**il est prévu un interstice axial (28) entre l'insert de coupe (3) et la traverse de liaison (12) de la pince (9).

8. Foret selon l'une des revendications 2 à 7, **caractérisé en ce que** la pince (9) est placée dans le logement (4) sous précontrainte élastique, les surfaces extérieures (14) des clavettes de serrage pressant contre les parois latérales (5) du logement (4).

9. Foret selon l'une des revendications 1 à 8, **caractérisé en ce que** l'insert de coupe (3) est placé dans le logement (4) avec une coopération de formes à effet radial.
